Europäisches Patentamt

**European Patent Office**

**Office européen des brevets**

(19)

(11) Numéro de publication: **0 251 854 B1**

(12) **FASCICULE DE BREVET EUROPEEN**

(45) Date de publication de fascicule du brevet:
**22.01.92**

(21) Numéro de dépôt: **87401341.0**

(22) Date de dépôt: **15.06.87**

(51) Int. Cl.⁵: **H04J 3/18**, H04L 25/36

(54) **Procédé de transmission de trains numériques sur des voies à débits plus élevés et dispositif de mise en oeuvre.**

(30) Priorité: **16.06.86 FR 8608638**

(43) Date de publication de la demande:
**07.01.88 Bulletin 88/01**

(45) Mention de la délivrance du brevet:
**22.01.92 Bulletin 92/04**

(84) Etats contractants désignés:
**DE GB IT NL**

(56) Documents cités:
EP-A- 0 049 652
DE-A- 2 555 591
GB-A- 1 316 343
US-A- 3 213 201

BELL TELEPHONE SYSTEM, Technical Publications, monograph 4139, mai 1962, pages 1-5, American Institute of Electrical Engineers, New York, US; W.E. BAKER et al.: "A buffer store for data transmission"

(73) Titulaire: **SAT Société Anonyme de Télécommunications**
**41, rue Cantagrel**
**F-75631 Paris Cedex 13(FR)**

(72) Inventeur: **Guerillot, Yves**
**36 rue de Picpus**
**F-75012 Paris(FR)**

(74) Mandataire: **Bloch, Gérard et al**
**2, square de l'Avenue du Bois**
**F-75116 Paris(FR)**

Rank Xerox (UK) Business Services

**Description**

La présente invention a tout d'abord pour objet un procédé de transmission d'un train numérique $D_i$ de données, arrivant à un premier débit, à l'aide d'un conduit numérique ayant un deuxième débit plus élevé que ledit premier débit, dans lequel, à l'émission, on découpe ledit train numérique $D_i$ en paquets de p bits, on associe à chaque paquet un préambule comprenant au moins un mot de synchronisation, et on transmet lesdits paquets sur ledit conduit.

La présente invention concerne donc la transmission d'informations numériques au moyen d'un conduit à débit plus élevé, ledit conduit ne présentant a priori aucune relation de phase avec la voie numérique de départ.

De tels problèmes surgissent en particulier dans les techniques de transmission par faisceaux hertziens, par câbles métalliques ou optiques, ou dans tout support de transmission d'informations numériques.

On connaît déjà un procédé du type défini ci-dessus, décrit dans l'article de W.E. BAKER et al : "A buffer store for data transmission" BELL TELEPHONE SYSTEM, Technical Publications, Monograph 4139, mai 1962, pages 1-5, New York, U.S.A. Toutefois, ce procédé ne prévoyant pas la restitution du signal d'horloge initial associé au train numérique $D_i$, il apparaît surtout adapté à la transmission d'informations numériques de type asynchrone, c'est-à-dire de groupes de bits séparés par des temps morts, chaque groupe de bits constituant par exemple un caractère.

La présente invention vise à pallier cet inconvénient en procurant un procédé qui, prévoyant la restitution du signal d'horloge initial, s'applique très bien à la transmission de trains numériques continus de type synchrone, pour lesquels la restitution du signal d'horloge est indispensable.

A cet effet, la présente invention a donc pour objet un procédé du type défini ci-dessus, caractérisé par le fait que :

- à l'émission, un signal d'horloge $H_i$ étant associé audit train numérique $D_i$, on commande les instants de départ desdits paquets à l'aide dudit signal d'horloge $H_i$, pour que l'intervalle de temps séparant le départ de deux paquets successifs soit égal à p fois la période dudit signal d'horloge $H_i$, et,

- en réception, on détermine les instants successifs d'arrivée desdits paquets en reconnaissant lesdits mots de synchronisation, et on restitue ledit signal d'horloge $H_i$, en divisant par p chaque intervalle de temps séparant l'arrivée de deux paquets successifs.

Le procédé de l'invention permet de s'affranchir des inconvénients des techniques connues. Il consiste essentiellement à générer des paquets d'informations et à transmettre ces paquets avec une périodicité déduite du rythme du signal incident. La restitution du rythme d'horloge en réception se déduit de la périodicité d'arrivée des paquets.

En outre, si chaque paquet est dimensionné pour contenir un nombre entier d'octets de bits d'information, il devient alors possible, sans augmenter la complexité du dispositif, de transmettre une synchronisation d'octets. Une telle structure s'adapte tout particulièrement pour rendre un conduit numérique apte à transmettre un signal 64 kbit/s en offrant des accès de type co-directionnels conformes à la recommandation G 703 du CCITT.

En outre, le conduit numérique étant asynchrone du rythme $H_i$ à transmettre, la transmission des paquets peut être affectée d'une gigue importante. L'invention vise également à pallier ces défauts.

A cet effet, et avantageusement, un signal d'horloge $H_c$ étant associé audit conduit numérique :

- à l'émission, on détermine le décalage temporel entre chaque instant de commande de départ d'un paquet et la transition suivante dudit signal d'horloge $H_c$, on code la valeur dudit décalage sous forme binaire, et on l'émet à l'aide d'éléments binaires dudit préambule, et,

- en réception, on reçoit lesdits éléments binaires de codage du décalage temporel, on les décode pour déterminer ladite valeur dudit décalage, et on corrige en conséquence la phase avec laquelle on restitue ledit signal d'horloge $H_i$.

La présente invention a également pour objet un dispositif pour la mise en oeuvre du procédé précédent, de transmission d'un train numérique $D_i$ de données, arrivant à un premier débit, à l'aide d'un conduit numérique ayant un deuxième débit plus élevé que ledit premier débit, comprenant, à l'émission, des moyens pour découper ledit train numérique $D_i$ en paquets de p bits, des moyens pour associer à chaque paquet un préambule comprenant au moins un mot de synchronisation, des moyens pour émettre lesdits paquets sur ledit conduit, et des moyens pour recevoir lesdits paquets, dispositif caractérisé par le fait que :

- à l'émission, un signal d'horloge $H_i$ étant associé audit train numérique $D_i$, il est prévu des moyens, commandés par ledit signal d'horloge $H_i$, pour commander lesdits moyens de découpage afin que l'intervalle de temps séparant le départ de deux paquets successifs soit égal à p fois la période dudit

EP 0 251 854 B1

signal d'horloge H$_i$, et,

- lesdits moyens de réception comprennent des moyens de reconnaissance desdits mots de synchronisation, des moyens, reliés auxdits moyens de reconnaissance, pour déterminer les instants successifs d'arrivée desdits paquets, des moyens, reliés auxdits moyens de détermination des instants d'arrivée, pour diviser par p chaque intervalle de temps séparant l'arrivée de deux paquets successifs, et restituer ledit signal d'horloge H$_i$, et des moyens commandés par lesdits moyens de division et de restitution d'horloge, pour restituer, à partir des données reçues sur ledit conduit numérique, ledit train numérique D$_i$.

Le système de l'invention est extrêmement souple et permet un fonctionnement dans une plage de fréquence très large ; cette souplesse peut se retrouver aussi bien au niveau de la voie entrante à bas débit qu'au niveau du conduit.

D'autres avantages et caractéristiques apparaîtront à la lecture de la description suivante illustrée par des dessins.

- la figure 1 représente un schéma d'une liaison selon l'invention à l'émission et à la réception.
- la figure 2 représente un schéma du dispositif de génération des paquets à l'émission à partir du signal à bas débit.
- la figure 3 représente un chronogramme des signaux présents sur le dispositif de la figure 2.
- la figure 4 représente un schéma du dispositif réception des signaux à bas débit.
- la figure 5 représente un chronogramme des signaux présents sur le dispositif de la figure 4.

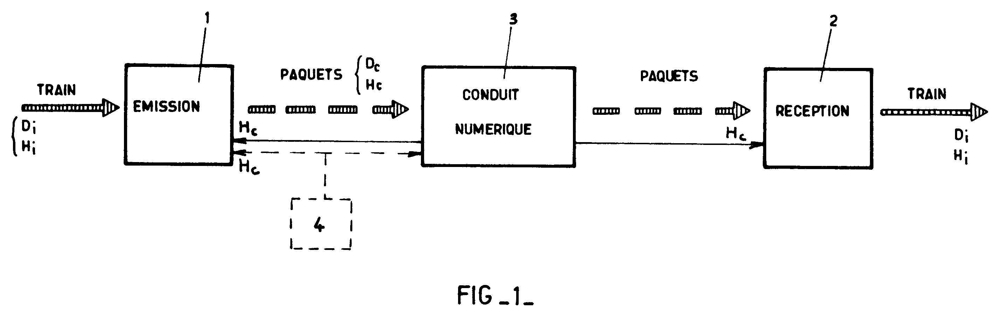

En se référant à la figure 1, soit un train numérique formé par exemple de données arrivant en continu, à un certain débit, ledit train présentant une fréquence f$_i$ d'horloge. Comme on souhaite le raccorder à un conduit numérique 3, à débit plus élevé présentant donc une fréquence f$_c$ d'horloge telle que f$_c$ supérieure à f$_i$, on dispose selon l'invention un dispositif 1 à l'émission et un dispositif 2 en réception permettant d'effectuer une transformation appropriée du train numérique incident à l'émission et la transformation inverse en réception.

Dans un exemple de réalisation du procédé de l'invention, la fréquence f$_i$ est égale à 64 khz mais l'invention s'appliquerait de la même façon à toute fréquence d'horloge.

L'invention consiste essentiellement à partir du train numérique incident D$_i$, à générer des paquets d'éléments binaires de longueur constante et à émettre ces paquets périodiquement avec une périodicité déduite du signal d'horloge H$_i$ de fréquence f$_i$, associée au train D$_i$. Chaque paquet comprend, en plus des informations utiles, un préambule.

Dans le cas où le paquet d'informations utiles est formé de 64 bits, on constitue avantageusement le préambule d'un octet. En particulier, dans ce préambule, on peut affecter 5 bits pour constituer un mot de synchronisation permettant la reconnaissance du début du paquet.

Deux bits peuvent être attribués à la transmission d'une information utile à la restitution de l'horloge, comme il sera explicité ultérieurement.

Le dernier bit de cet octet de préambule, enfin, peut être utilisé pour transmettre une signalisation à bas débit.

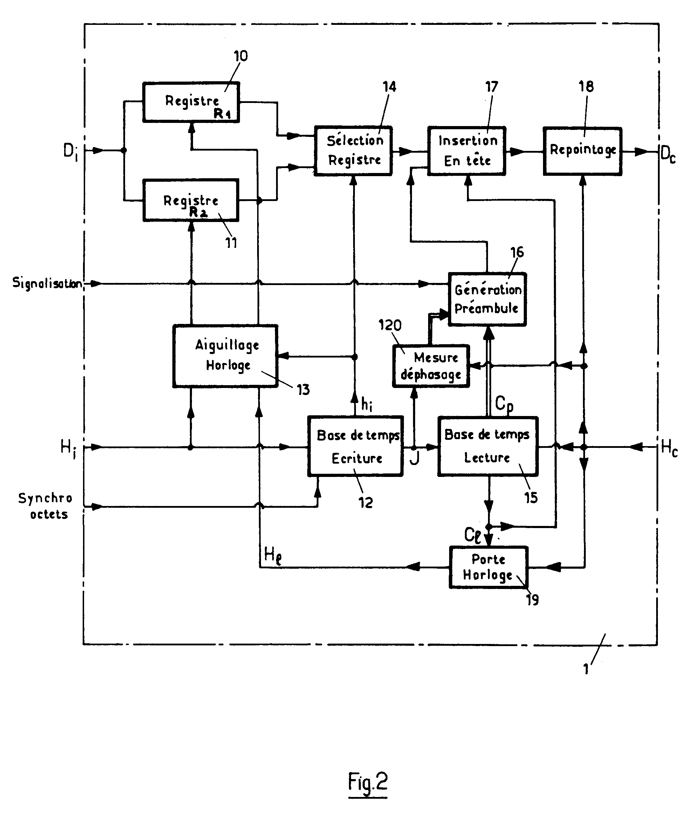

La figure 2 représente, à l'émission, le dispositif de formation des paquets. Le train numérique D$_i$ est placé en série dans deux registres 10 et 11, ici des registres à décalage, alternativement par blocs de p bits au rythme de l'horloge H$_i$ associée. Dans l'exemple préféré de l'invention, on confère une dimension de registre égale à 64 éléments binaires. Cette horloge H$_i$ rythme une base de temps écriture 12 qui fournit un signal h$_i$, d'une part à destination d'un circuit d'aiguillage d'horloge 13, et d'autre part à destination d'un circuit 14 de sélection de registre. Le circuit d'aiguillage d'horloge 13 reçoit, d'une part, l'horloge H$_i$ incidente associée au train numérique D$_i$ de données et, d'autre part, l'horloge H$_\ell$ de lecture des registres 10 et 11 issue d'un circuit 19 qui sera explicité ultérieurement. Le signal h$_i$ est un signal commandant alternativement l'application des signaux H$_i$ et H$_\ell$ vers chacun des registres 10 et 11. Le circuit 13 comprend donc simplement deux commutateurs, pourvus chacun d'une entrée et de deux sorties.

Le signal h$_i$ commande aussi alternativement la lecture dans chacun des registres grâce au circuit 14, qui est un commutateur à deux entrées et une sortie. Une base de temps 15 de lecture est asservie au signal H$_c$ d'horloge du conduit numérique à débit élevé. Cette base de temps 15 est déclenchée par le signal J fourni par la base de temps écriture 12. La période du signal J est p fois la période du signal H$_i$. Cette base de temps 15 fournit des signaux C$_p$ de commande au dispositif 16 de génération du préambule. Ce circuit 16 reçoit le résultat de la mesure effectué par un circuit 120, mesure représentant la phase de l'horloge H$_c$ du conduit numérique à débit élevé à l'instant où apparaît le signal J de déclenchement de la base de temps de lecture 15, c'est-à-dire à l'instant de commande de départ de chaque paquet. Plus précisément, cette phase représente le décalage temporel entre l'instant de commande de départ d'un paquet et la transition suivante du signal d'horloge H$_c$, c'est-à-dire l'instant d'exécution de cette commande.

3

EP 0 251 854 B1

Le résultat de cette mesure effectué par le circuit 120 est appliqué au circuit 16 et codé au moyen de deux éléments binaires inscrits dans le message de préambule. Ce message de préambule, engendré par ce circuit 16,est inséré au début de chaque paquet sous la commande de $C_\ell$ fourni par la base de temps lecture 15, au moyen du circuit 17. Un "repointage" au moyen du circuit 18 peut être effectué en sortie du circuit 17 au rythme de l'horloge $H_c$ du conduit numérique à débit élevé. Par "repointage", on entend ici une correction des décalages temporels parasites, le circuit 18 étant ici une simple bascule D.

Le signal $C_\ell$ généré par la base de temps de lecture 15 permet l'ouverture de la porte 19 qui permet la génération de l'horloge de lecture des p bits de chaque registre.

Lorsque la lecture des p bits est achevée, la base de temps 15 repasse en position attente jusqu'à l'arrivée d'une nouvelle commande J.

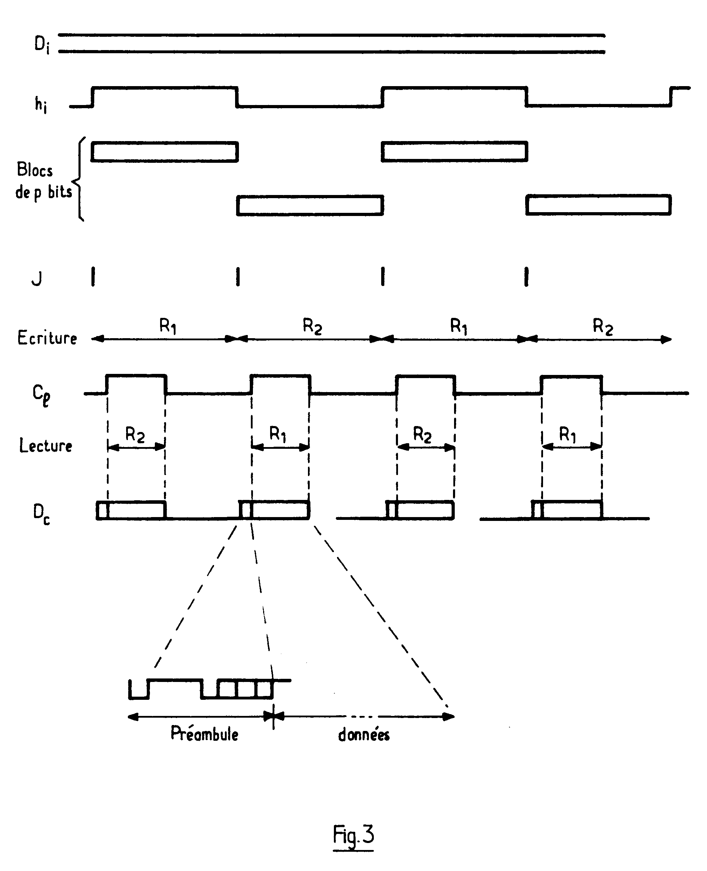

Le chronogramme de la figure 3 illustre ce découpage en paquets de 64 éléments binaires du train numérique $D_i$. Le signal $D_i$ de données est décomposé en deux groupes de paquets de 64 bits par exemple. Le signal $h_i$ correspond au rythme des paquets et ses fronts permettent de générer le signal J de déclenchement de l'écriture. La lecture des paquets est effectuée avec un léger retard par rapport à l'écriture, du fait de l'insertion du préambule au début de chaque paquet. Le signal $C_\ell$ de commande de porte d'horloge lecture complète ce chronogramme. Un tel système impose bien évidemment une fréquence de lecture plus élevée que la fréquence d'écriture.

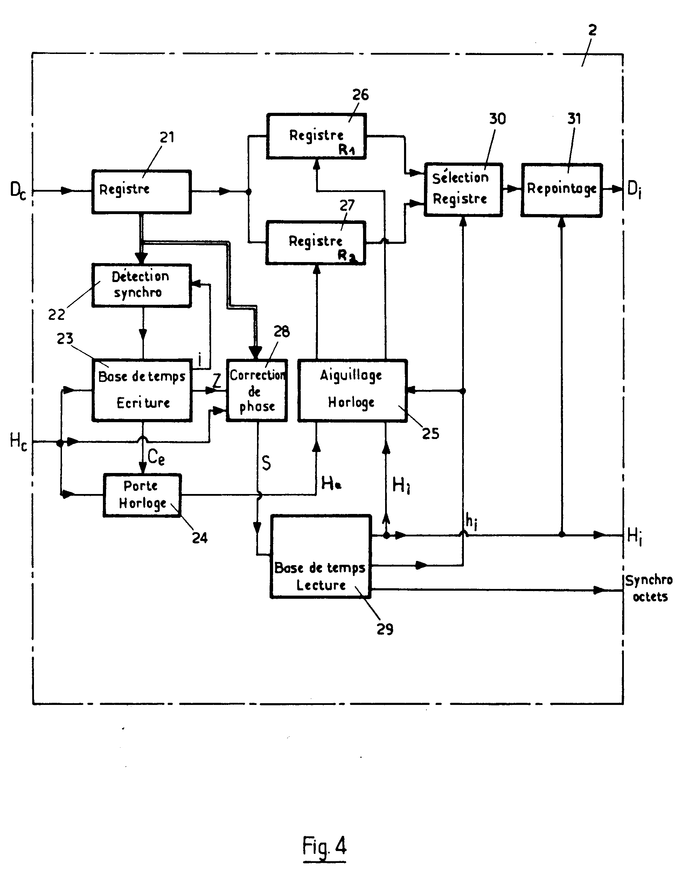

La figure 4 représente le dispositif 2 de réception de la figure 1. Le train numérique $D_c$ de données issu du conduit numérique de fréquence élevée est reçu au moyen d'un premier registre 21 qui, associé au circuit 22, identifie le début des paquets en reconnaissant le mot de synchronisation. On a choisi avantageusement un mot de synchronisation formé de 5 éléments binaires.

La reconnaissance de ce mot de synchronisation par le circuit 22 provoque le déclenchement de la base de temps écriture 23 rythmée par le signal d'horloge $H_c$ fourni par le conduit à débit élevé. Cette base de temps 23 fournit alors une commande $C_e$ sur l'entrée du circuit 24 qui engendre un signal d'horloge $H_e$ permettant l'écriture des données utiles contenues dans un paquet, lesdites données étant associées au préambule reconnu. Cette écriture est effectuée dans deux registres de p bits 26 et 27 alternativement sous le contrôle du circuit 25 qui permute les horloges $H_e$ et $H_i$ appliquées à ces registres. Ces registres 26 et 27 sont bien entendu des registres à décalage à 64 éléments binaires,dans l'exemple de l'invention. Simultanément, la base de temps 23 fournit au circuit 22 un signal i d'inhibition pendant le chargement des registres 26 et 27 afin de ne pas avoir de fausses synchronisations dûes à des imitations pendant l'inscription des données utiles dans les registres 26 et 27. La base de temps écriture 23 fournit également une impulsion Z qui correspond à l'instant d'arrivée de chaque paquet vers un circuit correcteur de phase 28. Ce circuit 28 modifie la phase du signal Z fourni par cette base de temps 23 en fonction des états des éléments binaires 6 et 7 de l'octet de préambule inscrits dans le registre 21 pour former le signal S. Ce signal S, dont la fréquence est, dans l'exemple considéré, égale à 1kHz, est alors appliqué à l'entrée de la base de temps 29 qui sert à rythmer l'écriture et la lecture des registres 26 et 27, cette lecture étant contrôlée par le circuit 25 afin de ne lire qu'un registre qui a été préalablement chargé. Ce circuit 25 est identique au circuit 13, et permet la sélection des horloges appliquées aux registres 26 et 27 dans le déroulement alterné de leurs cycles d'écriture et de lecture. Cette base de temps 29 comprend un circuit de multiplication par p, ici égal à 64, de la fréquence du signal S, c'est-à-dire de division par p de la période de ce signal, période qui correspond à un intervalle de temps séparant l'arrivée de deux paquets successifs. Le circuit de multiplication de fréquence comprend par exemple, et de façon connue, un oscillateur, ici à 64kHz, un diviseur de fréquence par 64 et un comparateur de phase, arrangés pour former une boucle de phase. La base de temps 29 restitue ainsi le signal d'horloge $H_i$ à 64 kHz. Cette base de temps 29 fournit aussi un signal $h_i$ qui, appliqué au circuit 30, contrôle la sélection du registre 26 ou 27 à lire. Puis un "repointage" du train numérique ainsi reconstitué est effectué au rythme $H_i$ au moyen du circuit 31.

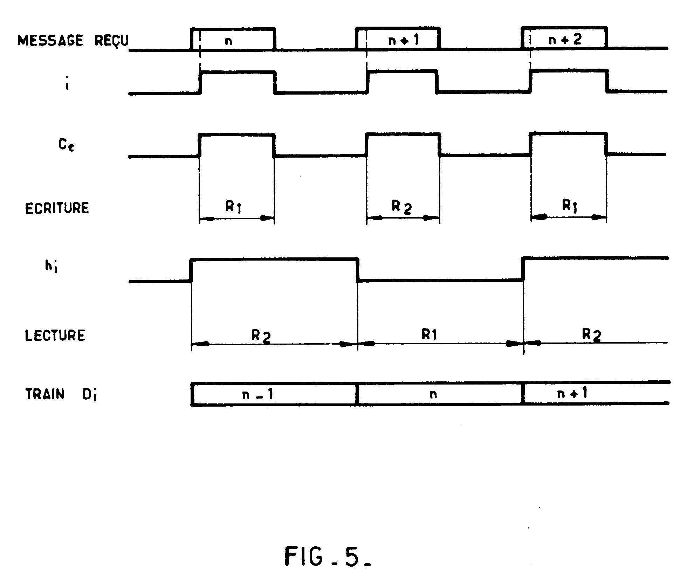

Le chronogramme de la figure 5 illustre la restitution, selon l'invention,d'un signal numérique, par exemple à 64 kbit/s, à partir d'un conduit à débit plus élevé. La reconnaissance du mot de synchronisation permet à la base de temps 23 de générer deux signaux $C_e$, d'une part, et i, d'autre part.

Le signal $C_e$ permet l'inscription des données dans un des deux registres 26 ou 27.

Le signal i inhibe la reconnaissance éventuelle d'un mot de synchronisation pendant l'inscription des données dans ces registres 26 et 27.

Pendant ce temps, on effectue une lecture de l'autre registre au rythme de l'horloge $H_i$ restituée. La synchronisation de la base de temps de lecture 29 est telle qu'il n'y ait pas de chevauchement entre l'écriture et la lecture d'un même registre. L'écriture dans le registre 27, par exemple, commence après la fin de sa lecture précédente, comme représenté sur la figure 5.

Le procédé de transmission des informations par paquets de p bits selon l'invention présente ainsi de

4

très grands avantages : il est de mise en oeuvre simple, et beaucoup plus souple que les procédés habituels d'organisation en trames de structure fixe; il permet également de pallier la gigue dont les paquets peuvent être affectés du fait de l'absence de synchronisme entre les deux horloges.

Afin de réduire cette gigue, le circuit 120 à l'émission mesure la phase de l'horloge $H_c$ au début de l'envoi de chaque paquet. Le résultat de cette mesure, codé par les bits 6 et 7 du préambule, est utilisé, après transmission et décodage, pour corriger la phase avec laquelle on restitue le signal d'horloge $H_i$ en réception. Cette mesure est effectuée par le circuit 120 à partir des informations d'horloge écriture et lecture fournies par les circuits 12 et 15 respectivement.

Le résultat est transmis à l'aide des éléments binaires 6 et 7 du préambule de chaque paquet. Une telle correction de phase permet une réduction importante de la gigue.

En augmentant la dimension du préambule, il serait encore possible d'affecter un nombre plus important d'éléments binaires pour la transmission de l'information de phase et donc d'obtenir une réduction plus importante de la gigue résiduelle. L'amplitude maximale de la gigue $A_m$, exprimée en éléments binaires du débit du train restitué, est liée au nombre de bits n affectés à l'information de phase par la relation de phase suivante :

$$A_m = \frac{1}{2n} \times \frac{\text{débit à transmettre}}{\text{débit du conduit}}$$

par exemple, dans le cas d'un débit de 90 kbit/s sur le conduit :

$$A_m = \frac{1}{4} \times \frac{64.10^3}{90.10^3} = 0,17$$

En outre, si chaque paquet est dimensionné pour contenir un nombre entier d'octets de bits d'information utiles, il devient alors possible, sans augmenter la complexité du dispositif, de transmettre une synchronisation d'octet. Une telle structure s'adapte tout particulièrement pour rendre un conduit numérique apte à transmettre un signal 64 kbit/s. Il suffit alors de synchroniser l'envoi des paquets par cette synchronisation d'octets.

Le procédé de l'invention impose une faible augmentation de débit et permet ainsi pour le conduit un débit minimal relativement peu élevé. Ainsi, dans le cas de paquets de 72 bits formés d'un préambule de 8 bits et d'un bloc de données de 64 bits, le débit minimal du conduit est
$\frac{72}{64}$ (débit à transmettre)
c'est-à-dire 72 kbits/s dans l'exemple considéré, soit une augmentation minimale de 12,5 %. La limite supérieure de débit est essentiellement dûe à la technologie utilisée pour la réalisation.

En outre, le mot de synchronisation est choisi tel qu'il ne puisse y avoir d'erreur de décodage en présence d'erreurs de transmission isolées (par exemple par imitation).

Le procédé de l'invention s'applique également à l'adaptation d'un train numérique à bas débit sur un conduit numérique à débit plus élevé offrant une interface binaire et rythme de type codirectionnel, par exemple conforme à la recommandation G703 du CCITT. Il suffit alors de prévoir un oscillateur local 4 qui génère un rythme $H_c$ approprié, délivré à la fois au dispositif d'émission 1 et au conduit numérique 3, comme le montre, en traits pointillés, la figure 1.

**Revendications**

1. Procédé de transmission d'un train numérique $D_i$ de données, arrivant à un premier débit, à l'aide d'un conduit numérique ayant un deuxième débit plus élevé que ledit premier débit, dans lequel, à l'émission, on découpe ledit train numérique $D_i$ en paquets de p bits, on associe à chaque paquet un préambule comprenant au moins un mot de synchronisation, et on transmet lesdits paquets sur ledit conduit, procédé caractérisé par le fait que :

   - à l'émission, un signal d'horloge $H_i$ étant associé audit train numérique $D_i$ on commande les instants de départ desdits paquets à l'aide dudit signal d'horloge $H_i$, pour que l'intervalle de temps séparant le départ de deux paquets successifs soit égal à p fois la période dudit signal

d'horloge $H_i$, et,

- en réception, on détermine les instants successifs d'arrivée desdits paquets en reconnaissant lesdits mots de synchronisation, et on restitue ledit signal d'horloge $H_i$ en divisant par p chaque intervalle de temps séparant l'arrivée de deux paquets successifs.

2. Procédé selon la revendication 1, dans lequel, un signal d'horloge $H_c$ étant associé audit conduit numérique :

- à l'émission, on détermine le décalage temporel entre chaque instant de commande de départ d'un paquet et la transition suivante dudit signal d'horloge $H_c$, on code la valeur dudit décalage sous forme binaire, et on l'émet à l'aide d'éléments binaires dudit préambule, et,
- en réception, on reçoit lesdits éléments binaires de codage du décalage temporel, on les décode pour déterminer ladite valeur dudit décalage, et on corrige en conséquence la phase avec laquelle on restitue ledit signal d'horloge $H_i$.

3. Dispositif, pour la mise en oeuvre du procédé selon l'une des revendications 1 ou 2, de transmission d'un train numérique $D_i$ de données, arrivant à un premier débit, à l'aide d'un conduit numérique (3) ayant un deuxième débit plus élevé que ledit premier débit, comprenant, à l'émission, des moyens (10,11,13,14) pour découper ledit train numérique $D_i$ en paquets de p bits, des moyens (16,17) pour associer à chaque paquet un préambule comprenant au moins un mot de synchronisation, des moyens (18) pour émettre lesdits paquets sur ledit conduit (3), et des moyens (2) pour recevoir lesdits paquets, dispositif caractérisé par le fait que :

- à l'émission, un signal d'horloge $H_i$ étant associé audit train numérique $D_i$, il est prévu des moyens (12), commandés par ledit signal d'horloge $H_i$, pour commander lesdits moyens (10,11,13,14) de découpage afin que l'intervalle de temps séparant le départ de deux paquets successifs soit égal à p fois la période dudit signal d'horloge $H_i$, et,
- lesdits moyens de réception (2) comprennent des moyens (21,22) de reconnaissance desdits mots de synchronisation, des moyens (23), reliés auxdits moyens (21,22) de reconnaissance, pour déterminer les instants successifs d'arrivée desdits paquets, des moyens (29), reliés auxdits moyens (23) de détermination des instants d'arrivée, pour diviser par p chaque intervalle de temps séparant l'arrivée de deux paquets successifs, et restituer ledit signal d'horloge $H_i$, et des moyens (25,26,27,30,31), commandés par lesdits moyens (29) de division et de restitution d'horloge, pour restituer, à partir des données reçues sur ledit conduit (3) numérique, ledit train numérique $D_i$.

4. Dispositif selon la revendication 3, dans lequel, un signal d'horloge $H_c$ étant associé audit conduit numérique, il est prévu en outre :

- à l'émission, des moyens (120) pour déterminer le décalage temporel entre chaque instant de commande de départ d'un paquet et la transition suivante dudit signal d'horloge $H_c$, et pour coder la valeur dudit décalage sous forme binaire, lesdits moyens (16,17) d'association du préambule étant agencés pour émettre cette valeur dudit décalage à l'aide d'éléments binaires de ce préambule, et,
- en réception, des moyens (21) pour recevoir lesdits éléments binaires de codage du décalage temporaire et des moyens (28) pour les décoder et commander lesdits moyens (29) de division et de restitution afin de corriger en conséquence la phase avec laquelle ils restituent ledit signal d'horloge $H_i$.

5. Dispositif selon l'une des revendications 3 ou 4, dans lequel lesdits moyens de découpage comprennent deux registres (10,11) de p bits chacun, recevant tous deux les données dudit train numérique $D_i$, des moyens (14) pour lire alternativement le contenu de chaque registre (10,11) et des moyens (13) pour appliquer alternativement à chaque registre (10,11) ledit signal d'horloge $H_i$ et un signal d'horloge de fréquence correspondant audit deuxième débit.

6. Dispositif selon l'une des revendications 3 ou 5, dans lequel lesdits moyens de restitution du train numérique comprennent deux registres (26,27) de p bits chacun, recevant tous deux les données reçues sur ledit conduit (3) numérique, et des moyens (30,25), commandés par lesdits moyens (29) de division et de restitution d'horloge, pour lire alternativement le contenu de chaque registre (26,27) et pour appliquer alternativement à chaque registre (26,27) ledit signal d'horloge $H_i$ et un signal d'horloge de fréquence correspondant audit deuxième débit.

7. Dispositif selon l'une des revendications 3 à 6 dans lequel ledit conduit numérique (3) délivre un signal d'horloge $H_c$, correspondant audit deuxième débit, auxdits dispositifs d'émission (1) et de réception (2).

8. Dispositif selon l'une des revendications 3 à 6, dans lequel un oscillateur local (4) délivre un signal d'horloge $H_c$ audit conduit numérique (3), et audit dispositif d'émission (1).

**Claims**

1. Method for transmitting a digital data stream $D_i$, arriving at a first rate, by means of a digital channel having a second rate higher than said first rate, wherein, on emission, said digital stream $D_i$ is chopped into packets of p bits, a preamble comprising at least one synchronization word is associated with each packet and said packets are transmitted over said channel, method characterized in that

   - on the emission side, with a clock signal $H_i$ associated with said digital stream $D_i$, the starting times of said packets are controlled by means of said clock signal $H_i$, so that the time interval separating the departure of two successive packets is equal to p times the period of said clock signal $H_i$, and
   - on the reception side, the successive arrival times of said packets are determined by recognizing said synchronization words, and said clock signal $H_i$ is restored by dividing each time interval separating the arrival of two successive packets by p.

2. Method according to claim 1, wherein with a clock signal $H_c$ associated with said digital channel :

   - at emission, the time shift between each control time of the starting of a packet and the following transition of said clock signal $H_c$ is determined, the value of said shift is coded in binary form, and it is emitted by means of binary elements of said preamble, and
   - at reception, said binary elements coding the time shift are received, they are decoded so as to determine said value of said shift, and the phase with which said clock signal $H_i$ is restored is corrected accordingly.

3. Device, for carrying out the method according to one of claims 1 or 2, for transmitting a digital data stream $D_i$, arriving at a first rate, by means of a digital channel having a second rate higher than said first rate, including, on the emission side, means (10,11,13,14) for chopping said digital stream $D_i$ into packets of p bits, means (16,17) for associating with each packet a preamble comprising at least one synchronization word, means (18) for emitting said packets over said channel (3) and means (2) for receiving said packets, device characterized in that

   - on the emission side, with a clock signal $H_i$ associated with said digital stream $D_i$, means (12) are provided, controlled by said clock signal $H_i$, for controlling said chopping means (10,11,13,14) so that the time interval separating the departure of two successive packets is equal to p times the period of said clock signal $H_i$, and
   - said reception means (2) comprise means (21,22) for recognizing said synchronization words, means (23) connected to said recognition means (21,22) for determining the successive arrival times of said packets, means (29) connected to said means (23) for determining the arrival times, for dividing each time interval separating the arrival of two successive packets by p, and restoring said clock signal $H_i$, and means (25,26,27,30,31) controlled by said clock restoring and dividing means (29) for restoring said digital stream $D_i$ from data received over said digital channel 3.

4. The device according to claim 3, in which with a clock signal $H_c$ associated with said digital channel is further provided :

   - at emission, means (120) for determining the time shift between each control time of the starting of a packet and the following transition of said clock signal $H_c$, and for coding the value of said shift in binary form, said preamble association means (16,17) being adapted so as to emit this value of said shift by means of bits of this preamble, and

- at reception, means (20) for receiving said binary elements coding the time shift and means (28) for decoding them and controlling said clock restoring and dividing means (29) so as to correct the phase with which said clock signal $H_i$ is restored accordingly.

5. The device as claimed in one of claims 3 or 4, wherein said chopping means include two registers (16,11) each of p bits, both receiving the data of said digital stream $D_i$, means (14) for reading alternately the contents of each register (10,11) and means (13) for alternatively applying to each register (10,11) said clock signal $H_i$ and a clock signal of a frequency corresponding to said second rate.

6. The device as claimed in one of claims 3 or 5, wherein said digital stream restoring means include two registers (26,27) each of p bits, both receiving the data received on said digital channel (3) and means (30,25) controlled by said clock restoring and dividing means (29) for alternately reading the contents of each register (26,27) and for alternately applying to each register (26,27) said clock signal $H_i$ and a clock signal of a frequency corresponding to said second rate.

7. The device as claimed in one of claims 3 to 6, wherein said digital channel (3) delivers a clock signal $H_c$ corresponding to said second rate, to said emission (4) and reception (2) devices.

8. The device as claimed in one of claims 3 to 6, wherein a local oscillator (4) delivers a clock signal $H_c$ to said digital channel (3) and to said emission device (1).

**Patentansprüche**

1. Verfahren zur Übertragung einer digitalen Datenfolge $D_i$, welche mit einer ersten Datenrate mittels einer digitalen Leitung eintrifft, die eine zweite Datenrate aufweist, welche höher als die genannte erste Datenrate ist, bei welchem beim Senden die genannte digitale Datenfolge $D_i$ in Pakete von $_p$ Bit aufgeteilt wird, jedem Paket eine Präambel mit mindestens einem Synchronisationswort vorangestellt wird und die genannten Pakete auf der genannten Leitung übertragen werden, Verfahren dadurch gekennzeichnet, daß:

- beim Senden, wenn ein Taktsignal $H_i$ an die genannte digitale Datenfolge $D_i$ angelegt wird, die Abgangszeitpunkte der genannten Pakete mittels des genannten Taktsignals $H_i$ gesteuert werden, damit der den Abgang von zwei aufeinanderfolgenden Paketen trennende Zeitraum $_p$ Mal so groß wie die Periode des genannten Taktsignals $H_i$ ist und
- beim Empfang die aufeinanderfolgenden Eintreffzeitpunkte der genannten Pakete bestimmt werden, indem die genannten Synchronisationsworte erkannt werden, und das genannte Taktsignal $H_i$ wiedergegeben wird, indem jeder das Eintreffen von zwei aufeinanderfolgenden Paketen trennende Zeitraum durch $_p$ geteilt wird.

2. Verfahren gemäß Anspruch 1, bei welchem, wenn ein Taktsignal $H_c$ an die genannte digitale Leitung angelegt wird:

- beim Senden die zeitliche Verschiebung zwischen jedem Abgangssteuerungszeitpunkt eines Paketes und der nächsten Transition des genannten Taktsignals $H_c$ bestimmt wird, der Wert der genannten Verschiebung binärcodiert und mit Hilfe von Bits der genannten Präambel gesendet wird und
- beim Empfang die genannten Codierbits der zeitlichen Verschiebung empfangen werden, dann decodiert werden, um den genannten Wert der genannten Verschiebung zu bestimmen und die Phase korrigiert wird, mit welcher das genannte Taktsignal $H_i$ wiedergegeben wird.

3. Vorrichtung zur Durchführung des Verfahrens gemäß einem der Ansprüche 1 oder 2 zur Übertragung einer digitalen Datenfolge $D_i$, welche mit einer ersten Datenrate mittels einer digitalen Leitung (3) eintrifft, die eine zweite Datenrate aufweist, welche höher als die genannte erste Datenrate ist, umfassend - beim Senden - Mittel (10,11,13,14), um die genannte digitale Datenfolge $D_i$ in Pakete von $_p$ Bits aufzuteilen, Mittel (16,17), um jedem Paket eine Präambel mit mindestens einem Synchronisationswort voranzustellen, Mittel (18), um die genannten Pakete auf der genannten Leitung (3) zu senden und

8

Mittel (2), um die genannten Pakete zu empfangen, Vorrichtung dadurch gekennzeichnet, daß:

- beim Senden, wenn ein Taktsignal $H_i$ an die genannte digitale Datenfolge $D_i$ angelegt wird, Mittel (12), die von dem genannten Taktsignal $H_i$ gesteuert werden, vorgesehen sind, um die genannten Aufteilungsmittel (10,11,13,14) zu steuern, damit der den Abgang von zwei aufeinanderfolgenden Paketen trennende Zeitraum $_p$ Mal so groß wie die Periode des genannten Taktsignals $H_i$ ist und
- die genannten Empfangsmittel (2) Mittel (21,22) zum Erkennen der genannten Synchronisationsworte umfassen, Mittel (23), die mit den genannten Erkennungsmitteln (21,22) verbunden sind, um die aufeinanderfolgenden Eintreffzeitpunkte der genannten Pakete zu bestimmen, Mittel (29), die mit den genannten Mitteln (23) zur Bestimmung der Eintreffzeitpunkte verbunden sind, um jeden das Eintreffen von zwei aufeinanderfolgenden Paketen trennenden Zeitraum durch $_p$ zu teilen und das genannte Taktsignal $H_i$ wiederzugeben, und von den genannten Teilungs- und Taktsignal-Wiedergabemitteln (29) gesteuerte Mittel (25,26,27,30,31), um ausgehend von den auf der genannten digitalen Leitung (3) empfangenen Daten die genannte digitale Datenfolge $D_i$ wiederzugeben.

4. Vorrichtung gemäß Anspruch 3, bei welcher, wenn ein Taktsignal $H_c$ an die genannte digitale Leitung angelegt wird, außerdem vorgesehen sind:

- beim Senden Mittel (120) zur Bestimmung der zeitlichen Verschiebung zwischen jedem Abgangssteuerungszeitpunkt eines Paketes und der nächsten Transition des genannten Taktsignals $H_c$ und zur Binärcodierung des Wertes der genannten Verschiebung, wobei die genannten Mittel (16,17) zur Voranstellung der Präambel diesen Wert der genannten Verschiebung mit Hilfe von Bits dieser Präambel senden und
- beim Empfang Mittel (21), um die genannten Codierbits der zeitlichen Verschiebung zu empfangen und Mittel (28), um sie zu decodieren und die genannten Teilungs- und Wiedergabemittel (29) zu steuern, um die Phase zu korrigieren, mit welcher sie das genannte Taktsignal $H_i$ wiedergeben.

5. Vorrichtung gemäß einem der Ansprüche 3 oder 4, bei welcher die genannten Aufteilungsmittel zwei Register (10,11) mit jeweils $_p$ Bit umfassen, die beide die Daten der genannten digitalen Datenfolge $D_i$ empfangen, Mittel (14), um abwechselnd den Inhalt jedes Registers (10,11) zu lesen und Mittel (13), um abwechselnd an jedes Register (10,11) das genannte Taktsignal $H_i$ und ein der genannten zweiten Datenrate entsprechendes Frequenztaktsignal anzulegen.

6. Vorrichtung gemäß einem der Ansprüche 3 oder 5, bei welcher die genannten Datenfolge-Wiedergabemittel zwei Register (26,27) mit jeweils $_p$ Bit umfassen, die beide die auf der genannten digitalen Leitung (3) empfangenen Daten empfangen und von den genannten Teilungs- und Taktsignal-Wiedergabemitteln (29) gesteuerte Mittel (30,25), um abwechselnd den Inhalt jedes Registers (26,27) zu lesen und abwechselnd an jedes Register (26,27) das genannte Taktsignal $H_i$ und ein der genannten zweiten Datenrate entsprechendes Frequenztaktsignal anzulegen.

7. Vorrichtung gemäß einem der Ansprüche 3 bis 6, bei welcher die genannte digitale Leitung (3) ein der zweiten Datenrate entsprechendes Taktsignal $H_c$ an die genannten Sendevorrichtung (1) und Empfangsvorrichtung (2) abgibt.

8. Vorrichtung gemäß einem der Ansprüche 3 bis 6, bei welcher ein lokaler Oszillator (4) ein Taktsignal $H_c$ an die genannte digitale Leitung (3) und an die genannte Sendevorrichtung (1) abgibt.

9

FIG_1_

Fig.2

11

$D_i$

$h_i$

Blocs
de p bits

J

Ecriture

$R_1$     $R_2$     $R_1$     $R_2$

$C_\ell$

Lecture

$R_2$     $R_1$     $R_2$     $R_1$

$D_c$

Préambule     données

Fig.3

Fig. 4

13

FIG.5.